# EUROPÄISCHE PATENTSCHRIFT

(11) **EP 2 460 698 B1**
(45) Veröffentlichungstag und Bekanntmachung des Hinweises auf die Patenterteilung: **03.04.2013**
(21) Anmeldenummer: 11007479.6
(22) Anmeldetag: 15.09.2011
(51) Int. Cl.: B60R 22/20, B60R 22/24

(54) **Höhenversteller für Fahrzeugsicherheitsgurt**
Height adjuster for an automobile seatbelt
Dispositif de réglage en hauteur pour ceintures de sécurité de véhicules

(30) Priorität: 01.12.2010 DE 202010016105 U
(43) Veröffentlichungstag der Anmeldung: 06.06.2012
(73) Patentinhaber: Innovative Components Technologies GmbH, 57368 Lennestadt (DE)
(72) Erfinder: Schauerte, André, 57368 Lennestadt (DE)
(74) Vertreter: Köchling, Conrad-Joachim

(56) Entgegenhaltungen:
- EP-A1- 0 685 373
- EP-A1- 0 745 520
- EP-A2- 2 067 670
- DE-A1- 19 928 162
- DE-A1-102005 040 640
- DE-B3-102006 000 816

## Beschreibung

Die Erfindung betrifft einen Höhenversteller für den Umlenkbeschlag eines Fahrzeugsicherheitsgurtes, bestehend aus einer Führungsschiene, die fahrzeugseitig befestigbar ist, und einem darin längs der Führungsschiene verschieblich gehaltenen Schlitten, an dem der Umlenkbeschlag befestigbar ist und der in unterschiedlichen Positionen rastbar ist, wozu die Führungsschiene in Längsrichtung beabstandete Rastfenster aufweist.

Derartige Höhenversteller sind im Stand der Technik bekannt. Es wird dazu beispielsweise auf die EP 2 067 670 A 2 verwiesen. Ergänzend wird auf die EP 0 685 373 A 1 verwiesen.

Im Stand der Technik ist es bekannt, die Führungsschienen an den Enden mit Lochungen zu versehen, die zum Einsatz von Befestigungsschrauben dienen, mittels derer die Führungsschiene an der Fahrzeugstruktur oder dem Fahrzeugblech befestigt wird. Bei der Fahrzeugstruktur oder dem Fahrzeugblech handelt es sich häufig um die B-Säule, C-Säule oder D-Säule eines Fahrzeuges. Solche Führungsschienen werden im Regelfall vertikal ausgerichtet an der Fahrzeugstruktur befestigt. Aus der erstgenannten Druckschrift ist es bekannt, die Führungsschiene am einen Ende an der Fahrzeugstruktur zu verhaken und am anderen Ende mit einer Schraube an der Fahrzeugstruktur zu befestigen. Die Verhakung erfolgt in der Weise, dass aus dem Material der Führungsschiene am Ende ausgeschnittene und abgebogene Haken vorgesehen sind, die in entsprechende Schlitze der Fahrzeugstruktur eingesetzt werden, um dieses Ende der Führungsschiene an der Fahrzeugstruktur zu fixieren.

In der Führungsschiene oder an der Führungsschiene ist ein Schlitten längs der Führungsschiene verschieblich gehalten, der den Umlenkbeschlag trägt, durch welchen der Fahrzeugsicherheitsgurt umgelenkt wird. Dieser Schlitten weist im Regelfall eine Handhabe auf, um ihn längs der Schiene verstellen zu können. Zudem weist der Schlitten Rastmittel auf, die in Rastfenster einrastbar sind, die in Längsrichtung der Führungsschiene beabstandet, vorzugsweise am Boden der Führungsschiene angeordnet sind. Solche Führungsschienen sind im Regelfall im Querschnitt als U-Profil oder C-Profil ausgebildet, so dass zwischen den Schenkeln der Schlitten gehalten ist und die Schenkel die Führung für den Schlitten bilden, wobei die Basis der Führungsschiene die entsprechenden Rastfenster aufweist, die mit Rastmitteln des Schlittens zusammenwirken. Durch die Handhabe am Schlitten, können die Rastmittel entrastet werden, so dass der Schlitten verschieblich ist. Sofern die Handhabe losgelassen wird, rasten die Rastmittel in entsprechende Rastfenster ein.

Die entsprechenden Führungsschienen müssen relativ stabil ausgebildet sein, da sie lediglich an den Enden an der Fahrzeugstruktur befestigt sind. Sofern insbesondere im Crash-Fall hohe Kräfte auf den Umlenkbeschlag einwirken, werden diese über den Schlitten auf die Führungsschiene übertragen, so dass die Führungsschiene im hohen Maße belastet ist und sich durchbiegen kann, sofern das Material der Führungsschiene nicht ausreichend bemessen ist oder die Führungsschiene nicht ausreichend steif ist.

Dies führt dazu, dass die Führungsschiene aus relativ dickwandigem Material geformt sein muss, was zu einer Gewichtserhöhung und zu einem erhöhten Materialverbrauch führt, der sich negativ auf die Kostenbilanz auswirkt. Es ist auch bekannt, am einen Ende der Führungsschiene mehrere Verhakungsmittel auszubilden, mittels derer die Führungsschiene an der Karosseriestruktur verhakt werden kann. In jedem Falle wird aber die Führungsschiene, wie sie beispielsweise aus der EP 2 067 670 A 2 bekannt ist, durch die Ausbildung der Haken geschwächt, da die Haken aus dem Material der Basis der Führungsschiene ausgeschnitten und abgebogen sind.

Ausgehend von diesem Stand der Technik liegt der Erfindung die Aufgabe zugrunde, einen Höhenversteller gattungsgemäßer Art zu schaffen, bei dem erreicht wird, dass die Führungsschiene auch bei erheblichen, auf den Umlenkbeschlag einwirkenden Zugkräften sich nicht biegen kann, sondern sicher in Solllage gehalten wird, also in Anlage an die entsprechende Gegenfläche der Karosseriestruktur oder dergleichen.

Zur Lösung dieser Aufgabe wird vorgeschlagen, dass die Führungsschiene hakenartige Haltemittel aufweist, die aus dem Material geformt sind, welches aus den Rastfenstern freigeschnitten ist und das über mindestens eine Kante des Rastfensterausschnitts an die Führungsschiene angeformt ist, und dass die hakenartigen Haltemittel so ausgebildet sind, dass sie zur Befestigung der Führungsschiene in Schlitze einer Fahrzeugstruktur oder eines Fahrzeugblechs eingesteckt werden können derart, dass Bestandteile der hakenartigen Haltemittel in der Montagesolllage Bereiche der Fahrzeugstruktur oder des Fahrzeugblechs untergreifen.

Insbesondere ist vorgesehen, dass der Höhenversteller gemäß der Erfindung an einer Fahrzeugstruktur oder einem Fahrzeugblech befestigt ist, wobei die Fahrzeugstruktur oder das Fahrzeugblech Schlitze aufweist, in welche die hakenartigen Haltemittel eingesteckt sind, wobei Bestandteile der hakenartigen Haltemittel in der Montagesolllage Bereiche der Fahrzeugstruktur oder des Fahrzeugblechs untergreifend angeordnet sind, um die Führungsschiene daran zu befestigen.

ist, wobei

Hierbei werden die hakenartigen Haltemittel aus dem Material geformt, was bei der bisherigen Anordnung und Ausbildung ausgestanzt wurde, also verloren war. Bisher wurden nämlich die Rastfenster lediglich gestanzt oder gelocht, so dass der entsprechende Stanzausschnitt oder dergleichen verloren war und dem Schrott zugeführt werden musste. Gemäß der Erfindung wird das Material, welches aus den Rastfenstern freigeschnitten ist, zur Ausbildung der hakenartigen Haltemittel genutzt, indem das aus den Rastfenstern ausgeschnittene Material mindestens an einer Randkante des Rastfensterausschnittes angeformt bleibt und der Rest dieses Materials aus der Führungsschiene abgebogen wird, um die hakenartigen Haltemittel zu bilden. Es wird hierdurch also sichergestellt, dass kein zusätzliches Material zur Formung der Haltemittel erforderlich ist.

Des Weiteren wird erfindungsgemäß vorgesehen, dass im Bereich aller Rastfenster der Führungsschiene entsprechende hakenartige Haltemittel angeformt sind. Die zur Befestigung der Führungsschiene dienende Fahrzeugstruktur weist entsprechende Schlitze auf, in welche die hakenartigen Haltemittel einsteckbar sind, wobei die hakenartigen Haltemittel in der Montagesolllage die den Schlitzen benachbarten Materialbereiche der Fahrzeugstruktur oder des Fahrzeugbleches untergreifen. Durch diese Anordnung wird die Führungsschiene über ihre Länge durch eine Vielzahl von hakenartigen Rastmitteln an der Fahrzeugstruktur oder dem Fahrzeugblech gehalten. Dies führt dazu, dass bei einer entsprechenden Zugbelastung des Umlenkbeschlages, die beispielsweise durch einen Crash verursacht ist, die Führungsschiene sicher in der Solllage an der Fahrzeugstruktur oder dem Fahrzeugblech gehalten ist, sich also nicht in Zugrichtung durchbiegen kann. Durch diese Ausbildung und Anordnung ist es möglich, die Führungsschiene aus dünnerem Material als bisher üblich auszubilden, ohne dass die Gefahr besteht, dass die Führungsschiene sich im Crashfall aufgrund der bestehenden Belastung durchbiegen kann. Auch ist es aus dem gleichen Grund möglich den Schienenquerschnitt zu reduzieren, so dass die Führungsschiene flacher ausgebildet werden kann.

Zur Sicherung der Solllage, die nach der Montage der Führungsschiene eingestellt ist, ist vorgesehen, dass die Führungsschiene zusätzlich an mindestens einem Längsende, vorzugsweise an beiden Längsenden, mit der Fahrzeugstruktur oder dem Fahrzeugblech lösbar verbunden ist.

Demzufolge kann also die Führungsschiene, wie bisher üblich, beispielsweise an beiden Enden mittels Schrauben an der Fahrzeugstruktur oder dem Fahrzeugblech befestigt sein. Auch kann die Führungsschiene an einem Ende mit der Fahrzeugstruktur verhakt sein und am anderen Ende durch eine Schraube befestigt sein.

Demzufolge ist also vorgesehen, dass die Verbindung durch Verhakung und/oder Verschraubung mittels Befestigungsschraube vorgesehen ist.

Eine bevorzugte Weiterbildung wird darin gesehen, dass die Führungsschiene an einem Längsende verkröpft ist und mit dem verkröpften Ende in eine Ausnehmung der Fahrzeugstruktur oder des Fahrzeugbleches eingesetzt ist, so dass das Ende die Fahrzeugstruktur oder das Fahrzeugblech untergreift.

Entsprechend dieser Gestaltung ist die Stelle der Fahrzeugstruktur oder des Fahrzeugbleches, an welcher das eine Ende der Führungsschiene befestigt werden soll, mit einer passenden Ausnehmung versehen. In die Ausnehmung ist das verkröpfte Ende der Führungsschiene eingeschoben, so dass in der Montagesolllage dieses Ende die Fahrzeugstruktur oder das Fahrzeugblech untergreift.

Zusätzlich kann hierbei vorgesehen, dass am verkröpften Ende eine Haltenase angeformt ist, die dem freien Ende des verkröpften Endes entgegengerichtet ist und die in Montagesolllage die Fahrzeugstruktur oder das Fahrzeugblech untergreift.

Zur Montage kann das verkröpfte Ende der Führungsschiene zunächst in die entsprechende Ausnehmung der Fahrzeugstruktur des Fahrzeugbleches eingeschoben werden, beispielsweise in einer Schräglage, und dann in Anlage zur entsprechenden Fahrzeugstruktur oder zum Fahrzeugblech gebracht werden und nachfolgend in Gegenrichtung der Einschubrichtung geringfügig verschoben werden, so dass die Haltenase den der Ausnehmung benachbarten Bereich der Fahrzeugstruktur oder des Fahrzeugbleches untergreift. Hierdurch ist die Lagesicherung des Endes der Führungsschiene erheblich verbessert.

Eine Möglichkeit der Anordnung besteht darin, dass die Führungsschiene in normaler Ausrichtung mit dem verkröpften Ende in die entsprechend große Ausnehmung eingeschoben und dann arretiert wird.

Alternativ kann auch vorgesehen sein, dass die Ausnehmung und das verkröpfte Ende derart angeordnet und ausgebildet ist, dass das verkröpfte Ende bei um 90 ° um ihre Längsachse verdrehter Führungsschiene in die Ausnehmung einsteckbar ist, und das verkröpfte Ende im Übergang zur Führungsschiene eingeschnürt ist, so dass das verkröpfte Ende in Einstecklage um 90 ° in die Montagesolllage samt Führungsschiene verdreht hinter der Fahrzeugstruktur oder dem Fahrzeugblech anzuordnen ist.

Bei dieser Ausgestaltung ist die Ausnehmung beispielsweise als Längsschlitz ausgebildet, so dass die Führungsschiene mit ihrem abgekröpften Ende in einer gegenüber der Solllage um 90 ° um ihre Längsachse verdrehten Lage eingeschoben wird. Anschließend kann die Führungsschiene bei eingeschobenem verkröpftem Ende um ihre Längsachse gedreht werden, so dass sie die Solllage einnimmt, wobei dazu eine Einschnürung zwischen Verkröpfung und Übergang zur Führungsschiene vorgesehen ist, deren Breite der Breite des die Ausnehmung bildenden Schlitzes der Fahrzeugstruktur oder des Fahrzeugbleches entspricht, wodurch die entsprechende Verdrehbewegung ermöglicht ist. Auch durch diese Anordnung ist eine sehr sichere Fixierung des Endes der Führungsschiene erreicht.

Alternativ kann vorgesehen sein, dass die Fahrzeugstruktur oder das Fahrzeugblech eine ausgestellte Lasche aufweist, in die ein Ende der Führungsschiene in Montagesolllage eingesteckt ist.

Bei dieser Ausgestaltung ist in dem Bereich, in dem das Ende der Führungsschiene anzuordnen ist, an der Fahrzeugstruktur oder dem Fahrzeugblech eine ausgestellte Lasche ausgebildet, die so dimensioniert ist, dass das Ende der Führungsschiene in diese Lasche einschiebbar ist und somit in Montagesolllage gesichert ist.

Eine bevorzugte Weiterbildung wird zudem darin gesehen, dass die hakenartigen Haltemittel zu der die Befestigungsebene für die Führungsschiene bildenden Fahrzeugstruktur oder zu dem Fahrzeugblech hin vorragend, vorzugsweise rechtwinklig von der Führungsschiene abragend, ausgerichtet sind.

Hierdurch ist sichergestellt, dass bei auf den Umlenkbeschlag einwirkenden Kräften sich die hakenartigen Haltemittel nicht biegen können, da sie durch die rechtwinklige abragende Anordnung hinsichtlich der Führungsschiene bei einwirkenden Kräften nicht gebogen werden können.

Bevorzugt ist zudem vorgesehen, dass die hakenartigen Haltemittel T-förmig ausgebildet sind und die Schlitze ebenfalls T-förmig ausgeformt sind, wobei deren Längssteg parallel zur in Montagerichtung ausgerichteten Führungsschiene gerichtet sind.

Gemäß dieser Anordnung erfolgt die Verbindung der Führungsschiene mit der Karosseriestruktur oder dergleichen in der Weise, dass zunächst das eine Ende der Führungsschiene mit der Verkröpfung in die Ausnehmung eingesetzt wird oder mit ihrem Ende in die entsprechende Lasche eingeschoben wird. Anschließend wird die Führungsschiene zur Karosseriestruktur hin bewegt, wobei die Köpfe der hakenartigen T-förmigen Haltemittel in die breiten Enden der T-förmigen Schlitze eingreifen. Anschließend wird die Führungsschiene in Längsrichtung geringfügig verschoben, so dass der Längssteg der hakenartigen Haltemittel in den Längsschlitz der T-förmigen Schlitze eingreift. Hierdurch ist erreicht, dass die T-förmigen Haltemittel hinter den T-förmigen Schlitzen verhaken und somit in Montagesolllage die Führungsschiene nicht durch auf den Umlenkbeschlag einwirkende Kräfte von der Karosseriestruktur abgehoben werden kann.

Alternativ kann vorgesehen sein, dass die hakenartigen Haltemittel L-förmig ausgebildet sind, vorzugsweise paarweise an jedem Rastfensterausschnitt, wobei in Montagesolllage die Enden der Haken alle gleichgerichtet sind und parallel zur Schienenlängserstreckung ausgerichtet sind.

Hierbei kann die Montage in ähnlicher Weise erfolgen, wie oben beschreiben, wobei zunächst die L-förmigen hakenartige Haltemittel in die entsprechenden Ausnehmungen der Karosseriestruktur eingesetzt werden und anschließend die Führungsschiene in Längsrichtung geringfügig verschoben wird, so dass die Enden der L-förmigen Haken die entsprechende Karosseriestruktur untergreifen.

Um die von der Führungsschiene auf die Karosseriestruktur oder das Fahrzeugblech übertragenen Kräfte gut aufnehmen zu können, kann vorgesehen sein, dass unter der Fahrzeugstruktur oder dem Fahrzeugblech ein Verstärkungsteil, insbesondere ein Verstärkungsblech angeordnet ist, welches die entsprechenden Schlitze und/oder Ausnehmungen und/oder Lasche wie diese oder dieses aufweist, wobei die hakenartigen Haltemittel und/oder die Verkröpfung und/oder das Ende der Führungsschiene das Verstärkungsteil mit untergreift.

Ausführungsbeispiele der Erfindung sind in der Zeichnung dargestellt und im Folgenden näher beschrieben. Es zeigt:
- Figur 1: eine erste Ausführungsform einer Führungsschiene von der Rückseite her gesehen;
- Figur 2: desgleichen von der Vorderseite her gesehen;
- Figur 3: die Führungsschiene in einer Vormontagelage zu der entsprechendenKarosseriestruktur;
- Figur 4: einen folgenden Montageschritt in gleicher Ansicht;
- Figur 5: eine Einzelheit in der Montagesolllage mit zusätzlichem untergelegten Verstärkungsblech;
- Figur 6: eine zweite Art der Vormontage;
- Figur 7 und 8: Folgeschritte der Vormontage;
- Figur 9: ein weiterer Schritt der Vormontage;
- Figur 10: die Endmontagelage;
- Figur 11: ein Detail in der Endmontagelage von der Rückseite her gesehen;
- Figur 12: eine Teilansicht einer Variante von der Rückseite her gesehen;
- Figur 13: einen größeren Ausschnitt der Variante ebenfalls in Rückansicht gesehen;
- Figur 14: die Variante in der Montagesolllage an der Karosseriestruktur mit Verstärkungsblech von der Rückseite her gesehen;
- Figur 15 bis 17;: Einzelheiten von der Vorderseite und Rückseite der Führungsschiene her gesehen;
- Figur 18: eine weitere Variante in einer Vormontagelage gesehen;
- Figur 19: die Variante in einer Endmontagelage von der Rückseite her gesehen;
- Figur 20: eine weitere Variante in einer Sollmontagelage gezeigt, von vorn gesehen;
- Figur 21: die Variante von der Rückseite her gesehen;
- Figur 22 und 23: Einzelheiten der Ausführungsform nach Figur 20 und 21 von der Rückseite her gesehen;
- Figur 24: die zugehörige Ausführungsform einer Führungsschiene von vorn gesehen;
- Figur 25: eine weitere Variante in einer Vormontagelage von der Rückseite her gesehen;
- Figur 26: die Variante in der Sollmontagelage ^ ebenfalls von der Rückseite her gesehen.

In den Zeichnungen ist die Anordnung der Führungsschiene 1 eines Höhenverstellers 2 für einen Umlenkbeschlag eines Fahrzeugsicherheitsgurtes gezeigt. Dieser Höhenversteller 2 besteht aus einer Führungsschiene 1, die in geeigneter Weise an einer Fahrzeugstruktur oder einem Fahrzeugblech 5 befestigt wird. In der Führungsschiene 1 ist längsverschieblich ein Schlitten 23 gehalten, an dem der in der Zeichnung nicht dargestellte Umlenkbeschlag befestigbar ist. Der Schlitten 23 weist Rastmittel auf, die dazu dienen, den Schlitten 23 in unterschiedlichen Positionen relativ zur Führungsschiene 1 verrasten zu können. Dazu weist die Führungsschiene 1 im Ausführungsbeispiel in der Basis eine Vielzahl von Rastfenstern 12 auf.

Um die Führungsschiene 1 an der Karosseriestruktur 5 oder dergleichen befestigen zu können, weist die Führungsschiene 1 hakenartige Haltemittel 13, 15 auf, die aus dem Material geformt sind, welches aus den Rastfenstern 12 der Führungsschiene 1 freigeschnitten und umgebogen ist. Diese hakenartigen Haltemittel 13, 15 sind dabei über mindestens eine Kante des Rastfensterausschnittes an die Führungsschiene 1 angeformt.

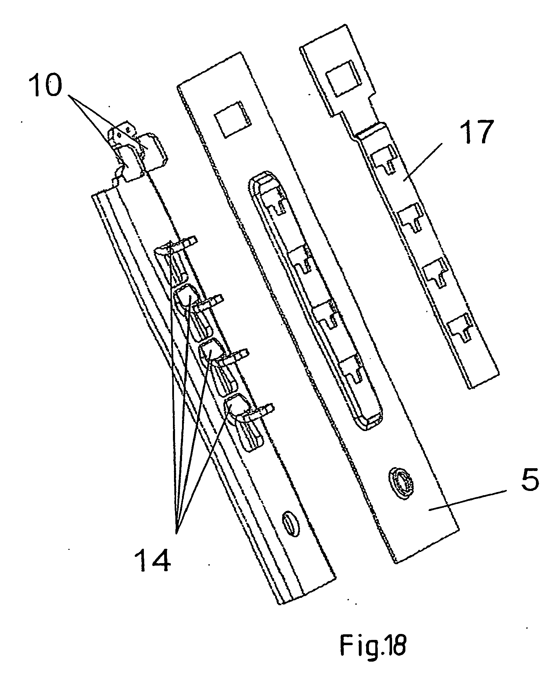

Anschaulich ist dies beispielsweise in Figur 18 gezeigt, wo die hakenartigen Haltemittel 13 an einer Auslaufkante der Einlaufschrägen von Raststegen 14 beziehungsweise der Rastfensteroberkante der Rastfenster 12 zwischen den aufeinanderfolgenden Rastfenstern 12 angeformt sind.

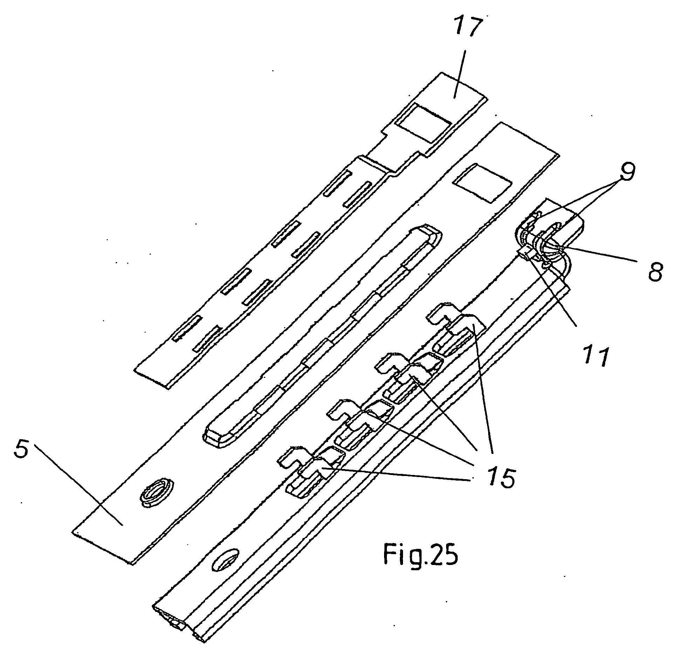

Alternativ ist auch, wie beispielsweise in Figur 25 gezeigt, eine Abkantung an den Seitenkanten der Rastfenster 12 in Form L-förmiger Haltemittel 15 möglich, wobei der freistehende Endsteg des L-Profils in Z-Richtung bevorzugt in Montagesolllage nach unten gerichtet ist.

Die hakenartigen Haltemittel 13, 15 sind also aus dem Material gebildet, welches eigentlich bei der Bildung der Rastfenster 12 ausgetrennt wird, erfindungsgemäß aber im Wesentlichen an die Führungsschiene 1 angeformt bleibt, um die hakenartigen Rastmittel 13, 15 zu bilden.

Die zur Befestigung der Führungsschiene 1 dienende Fahrzeugstruktur oder das zur Befestigung dienende Fahrzeugblech 5 weist Schlitze 22 auf, in welche die hakenartigen Haltemittel 13, 15 einsteckbar sind. Bestandteile der hakenartigen Haltemittel 13, 15 untergreifen in der Montagesolllage Bereiche der Fahrzeugstruktur oder des Fahrzeugbleches 5, so dass eine sichere Anordnung und Fixierung gewährleistet ist.

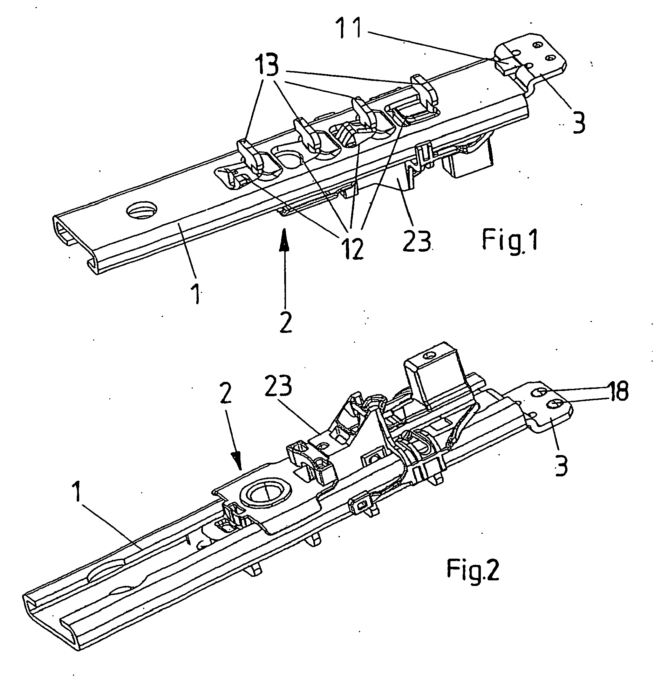

Zusätzlich ist die Führungsschiene 1 an ihren beiden Längsenden mit der Fahrzeugstruktur oder dem Fahrzeugblech 5 lösbar verbunden. Hierzu ist an dem in Einbaulage oberen Ende eine später noch im Einzelnen beschriebene Verhakung vorgesehen, während am unteren Ende eine Befestigungsschraube 19 vorgesehen ist, die eine entsprechende Lochung der Führungsschiene 1 am unteren Ende durchgreift. Beispielsweise bei der Ausführungsform gemäß Figur 1 bis 5 ist die Führungsschiene 1 an ihrem in Einbausolllage oberen Ende verkröpft und bildet durch die Verkröpfung eine Einstecklasche 3, die in eine entsprechende Ausnehmung 4.1 oder 4.2 der Fahrzeugstruktur oder des Fahrzeugbleches 5 einsetzbar ist, so dass das Ende der Führungsschiene 1 mit der Einstecklasche 3 die Fahrzeugstruktur oder das Fahrzeugblech 5 untergreift.

Zusätzlich kann an dem verkröpften Ende eine Haltenase 11 ausgeklinkt sein, die zur weiteren Fixierung dient. Diese Haltenase 11 ist dem freien Ende des verkröpften Endes der Einstecklasche 3 entgegengerichtet. In Montagesolllage untergreift sie Bestandteile der Fahrzeugstruktur oder des Fahrzeugbleches 5.

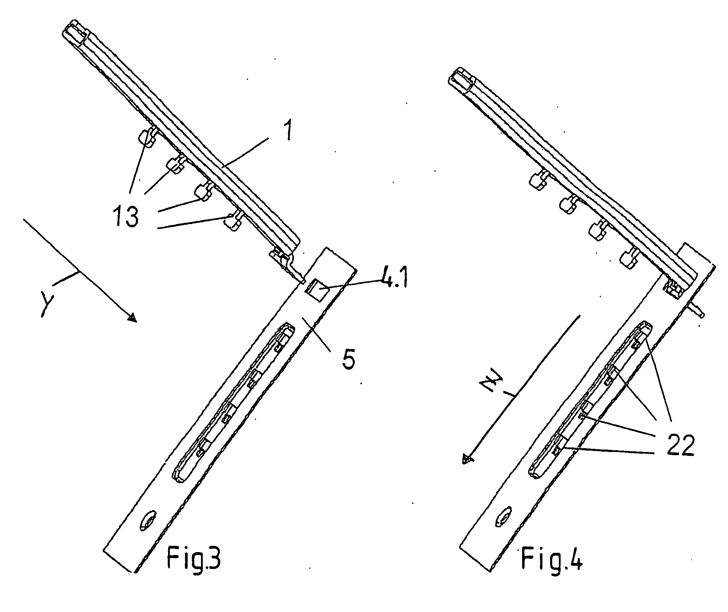

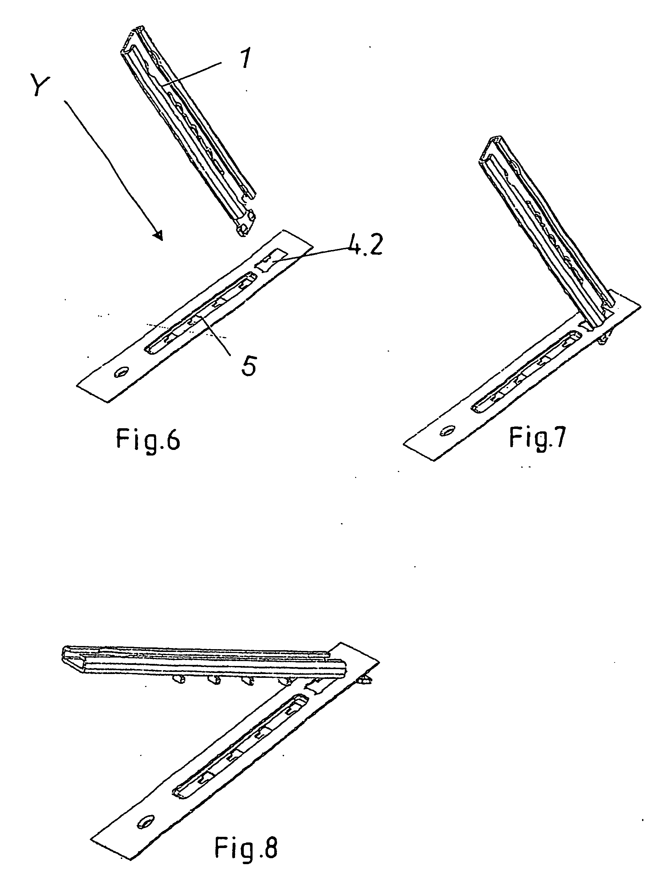

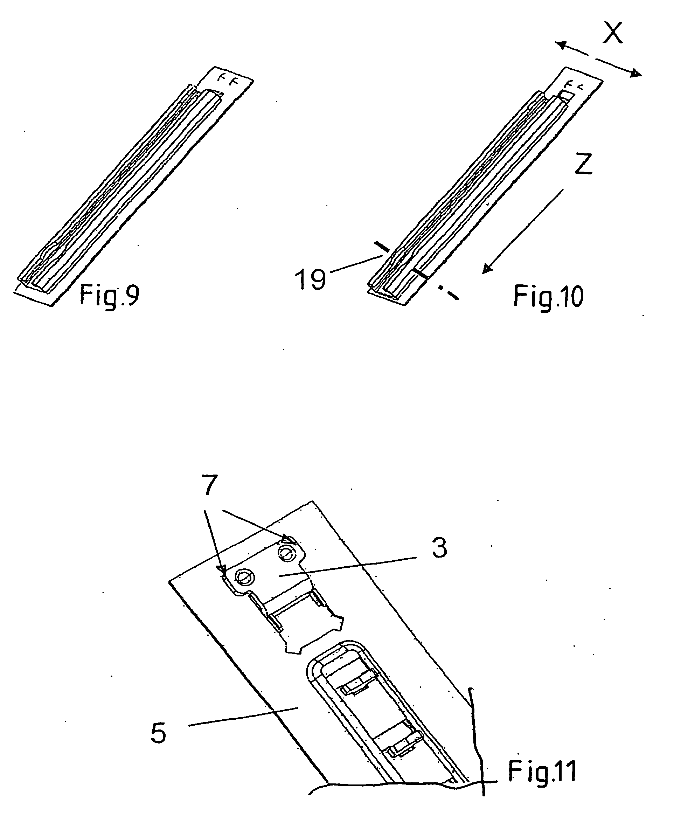

Während bei der Ausführungsform nach Figur 3 bis 5 die Ausnehmung 4.1 ein entsprechend bemessener Querschlitz quer zur Schienenlängserstreckung in der Karosseriestruktur 5 ist, in den die Einstecklasche 3 eingesteckt werden kann, ist in der Ausführungsform nach Figur 6 bis 8 die Ausnehmung 4.2 als Längsschlitz ausgebildet. Demzufolge wird das verkröpfte Ende mit der Einstecklasche 3 in der Weise in die Ausnehmung 4.2 eingesetzt, dass die Führungsschiene um 90° um ihre Längsachse gedreht ist, wie in Figur 6 und 7 ersichtlich. Das verkröpfte Ende ist dabei etwa T-förmig eingeschnürt, so dass die Führungsschiene 1 in der Sollposition, die in Figur 7 gezeigt ist, um ihre Längsachse gedreht werden kann, so dass Bestandteile der Einstecklasche 3 hinter der Karosseriestruktur 5 positioniert sind und beim Verschwenken der Führungsschiene 1 aus der Vormontagelage gemäß Figur 8 in die Endmontagelage gemäß Figur 9 die Karosseriestruktur 5 oder dergleichen hintergreifen. Anschließend wird die Führungsschiene 1 in Z-Richtung verschoben, um die Verriegelung zu vollziehen.

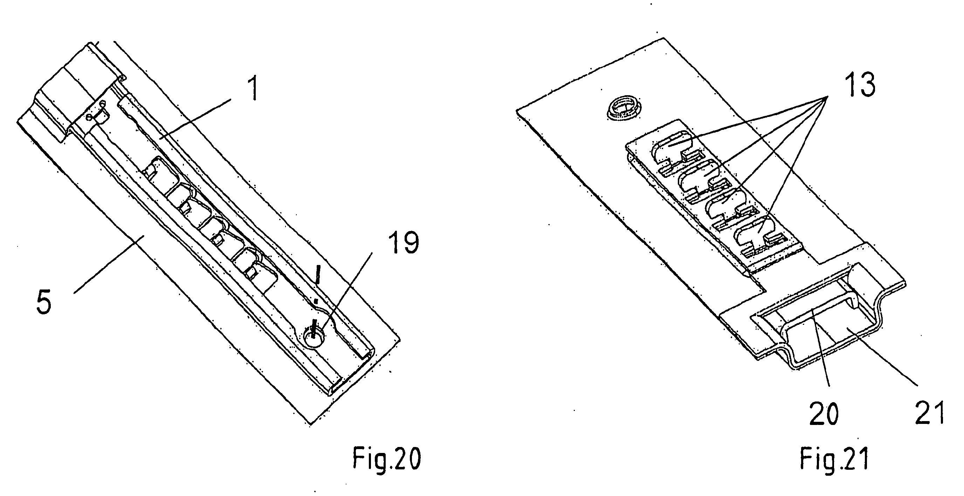

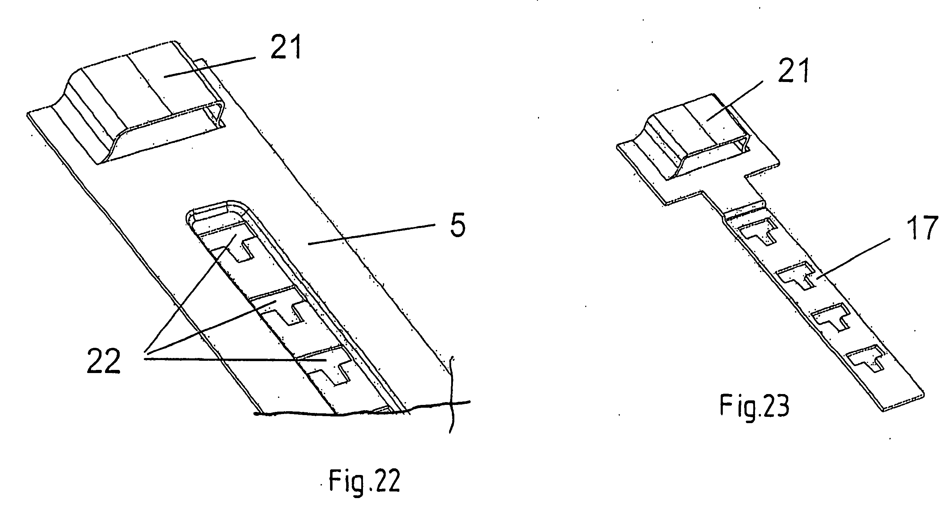

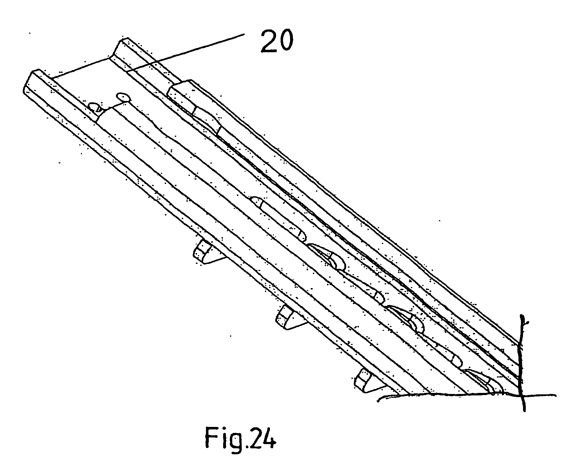

Bei der Ausführungsform nach Figur 20 bis 24 weist die Fahrzeugstruktur oder das Fahrzeugblech 5 eine ausgestellte Lasche 21 auf. In diese ist die Führungsschiene 1 mit ihrem geraden Ende 20 einschiebbar, um die Verbindung herzustellen. Dies ist in den angegebenen Figuren gut ersichtlich.

Die hakenartigen Haltemittel 13,15 ragen vorzugsweise zu der die Befestigungsebene für die Führungsschiene 1 bildenden Fahrzeugstruktur oder zu dem Fahrzeugblech 5 hin vor, und zwar vorzugsweise rechtwinklig von der Führungsschiene 1 abragend.

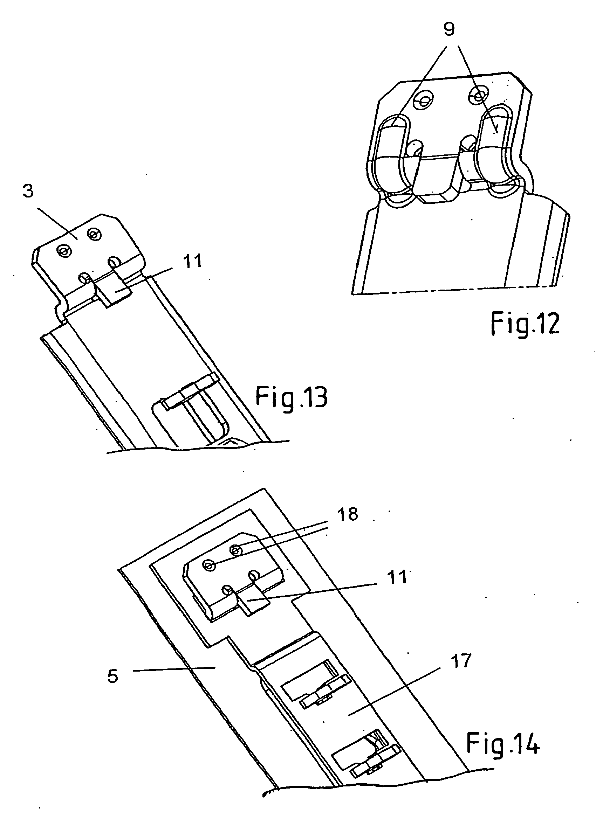

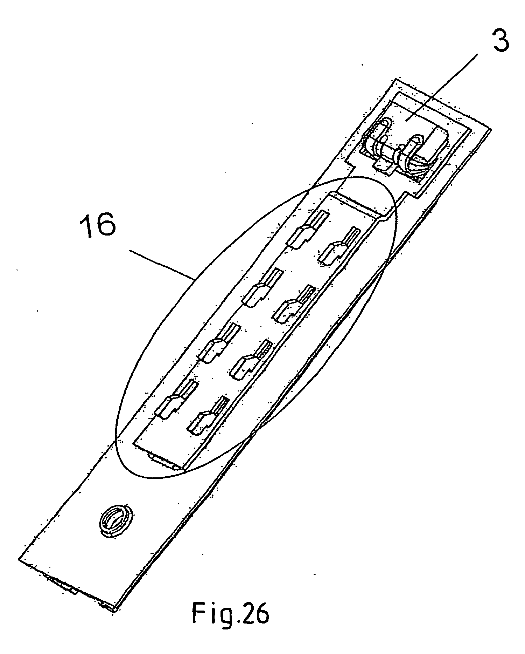

Bei den Ausführungsformen gemäß Figur 1 bis Figur 24 sind die hakenartigen Haltemittel 13 T-förmig geformt. Die Schlitze 22 sind ebenfalls T-förmig ausgebildet, wobei deren Längssteg parallel zur in Montagesollrichtung ausgerichteten Führungsschiene 1 gerichtet sind, wie beispielsweise in Figur 18 ersichtlich ist.
Bei der Ausführungsform gemäß Figur 25 und 26 sind die hakenartigen Haltemittel 15 L-förmig ausgebildet und paarweise an jedem Rastfenster 12 der Führungsschiene ausgebildet und angeschnitten. Die Hakenvarianten können nicht nur in Verbindung mit den Rastfenstern ausgestellt werden, sondern gegebenenfalls auch aus separaten Ausstanzungen geformt werden. In Montagesolllage sind die Enden der hakenartigen Haltemittel 15 gleichgerichtet und parallel zur Schienenlängserstreckung ausgerichtet, wobei das Hakenmaul zum in Montagesolllage unteren Ende der Führungsschiene 1 hin offen ist.

Zusätzlich kann, wie in einigen Zeichnungsfiguren gezeigt, unter der Fahrzeugstruktur oder dem Fahrzeugblech 5 ein Verstärkungsteil 17, insbesondere in Form eines Verstärkungsbleches angeordnet sein. Dieses Verstärkungsteil 17 weist entsprechende Formgebung, Schlitze, Ausnehmungen und/oder Lasche wie die Karosseriestruktur 5 auf, so dass in der Montagesolllage die entsprechenden Befestigungsmittel der Führungsschiene 1 nicht nur die Karosseriestruktur, sondern auch das zusätzliche Verstärkungsteil 17 untergreifen.

Bei der Ausführungsform nach Figur 1 bis 5 erfolgt die Montage in der Weise, wie dies in Figur 3 bis 5 verdeutlicht ist, in dem die Führungsschiene 1 zunächst mit der Einstecklasche 3 in den Querschlitz 4.1 eingeführt wird (in Y-Richtung). Anschließend wird die Führungsschiene 1 um 90 ° in eine Position relativ zur Karosseriestruktur 5 verschwenkt, in der die Köpfe der hakenartigen Haltemittel 13 in den Quersteg der

T-förmigen Ausnehmungen 22 eingreifen. Anschließend wird die komplette Führungsschiene 1 in Z-Richtung verschoben, so dass die Köpfe der hakenartigen Haltemittel 13 im Bereich der Längsstege der T-förmigen Ausnehmungen 22 sitzen. Hierbei greift ebenso die ausgeklinkte Fixiernase 11 unter die Karosseriestruktur 5 im Bereich neben der Ausnehmung 4.1. Zur endgültigen Lagesicherung wird in die entsprechende Lochung die Befestigungsschraube 19 eingebracht.

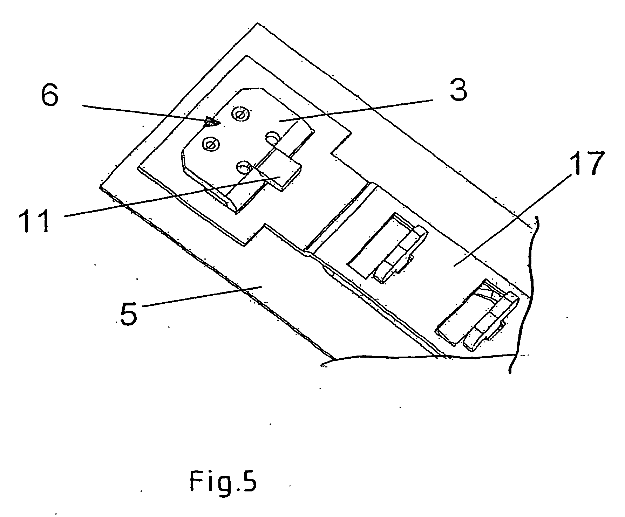

Bei der Ausführungsform gemäß Figur 6 bis 8 ist der Montageablauf ähnlich, wobei lediglich, wie schon oben ausgeführt, die Führungsschiene 1 zunächst in einer um 90 ° gedrehten Lage in Y-Richtung in die Ausnehmung 4.2 eingesetzt und anschließend um ihre Längsachse um 90 ° gedreht wird, so dass die Position gemäß Figur 8 erreicht ist. Hierbei greift die Einstecklasche 3 nicht nur stirnseitig (6), wie in Figur 5 gezeigt, sondern aufgrund ihrer T-Form beidseitig (7) hinter die Wandung des Karosserieformteiles 5. Auch hierbei wird wiederum die Führungsschiene 1 zur Karosseriestruktur 5 hin bewegt und auf Anlage gebracht und anschließend in Z-Richtung verschoben, so dass die hakenartigen Haltemittel 13 in den Lochungen 22 arretiert sind.

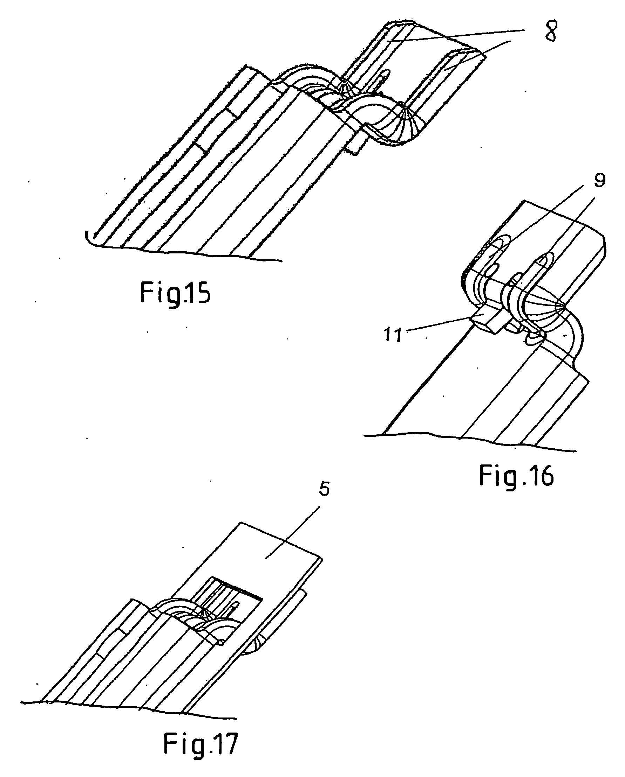

Die Einstecklasche 3 kann im Bereich der Verkröpfung mit Sicken 9, die in Längsrichtung verlaufen, ausgestattet sein, um eine Versteifung zu erreichen. Auch kann die Einstecklasche 3 im Bereich der Verkröpfung mit seitlichen Kragen oder Stegen 8 ausgestaltet sein, wie in Figur 15 verdeutlicht ist, um die Versteifung zu erreichen.

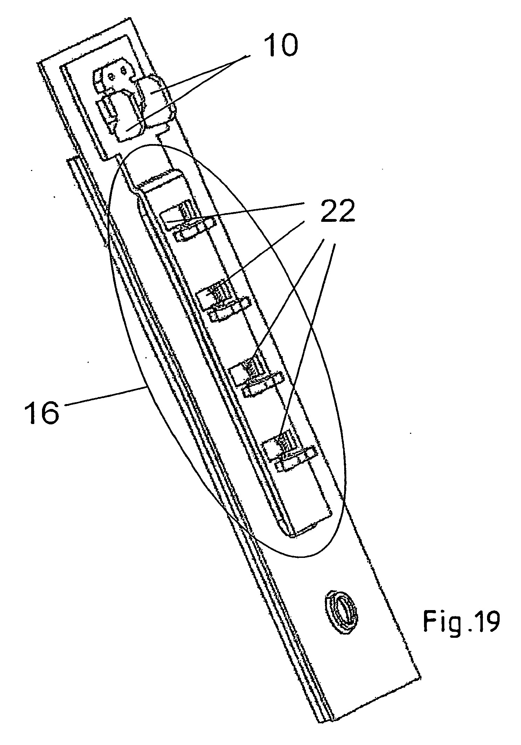

Schließlich kann die Lasche 3 auch mit angeformten L-förmigen Haken ausgestattet sein, wie dies in Figur 18 verdeutlicht ist, wobei diese Haken in der Endmontagelage die Karosseriestruktur 5 hintergreifen, wie in Figur 19 veranschaulicht ist.

Die Anzugsflächen, die in der Montagesolllage beim Verschieben der Führungsschiene 1 ein Anzugsmoment in Richtung auf die Karosseriestruktur 5 oder dergleichen bewirken, können sämtlich geschrägt sein, um beim Verschieben ein zunehmendes Anzugsmoment zu erreichen. Diese Anordnung ist nur sinnbildlich durch das Bezugszeichen 16 angegeben. Um einen klapperfreien Sitz der Anordnung sicherzustellen, können im oberen Bereich der Einstecklasche 3 an der Karosseriestruktur 5 oder an der Einstecklasche 3 Verprägungen 18 vorgesehen sein, welche in Montagesolllage eine Verspannung mit der entsprechenden Gegenkomponente bewirken.

Die Erfindung stellt einen besonders stabilen Höhenversteller zur Verfügung, der einfach zu montieren ist, eine hohe Lagesicherheit auch unter Belastungszuständen aufweist und kostengünstig aus relativ dünnem Material auch bei geringer Höhe des Schienenquerschnitts gefertigt werden kann.

Die Erfindung nach Anspruch 1 ist nicht auf die Ausführungsbeispiele beschränkt, sondern im Rahmen der Offenbarung vielfach variabel.

## Patentansprüche

1. Höhenversteller (2) für den Umlenkbeschlag eines Fahrzeugsicherheitsgurtes, bestehend aus einer Führungsschiene (1), die fahrzeugseitig befestigbar ist, und einem darin längs der Führungsschiene verschieblich gehaltenen Schlitten (23), an dem der Umlenkbeschlag befestigbar ist und der in unterschiedlichen Positionen rastbar ist, wozu die Führungsschiene (1) in Längsrichtung beabstandete Rastfenster (12) aufweist, **dadurch gekennzeichnet, dass** die Führungsschiene (1) hakenartige Haltemittel (13,15) aufweist, die aus dem Material geformt sind, welches aus den Rastfenstern (12) freigeschnitten ist und das über mindestens eine Kante des Rastfensterausschnitts an die Führungsschiene (1) angeformt ist, und dass die hakenartigen Haltemittel (13,15) so ausgebildet sind, dass sie zur Befestigung der Führungsschiene (1) in Schlitze (22) einer Fahrzeugstruktur oder eines Fahrzeugblechs (5) eingesteckt werden können derart, dass Bestandteile der hakenartigen Haltemittel (13,15) in der Montagesolllage Bereiche der Fahrzeugstruktur oder des Fahrzeugblechs (5) untergreifen.

2. Höhenversteller nach Anspruch 1, befestigt an einer Fahrzeugstruktur oder einem Fahrzeugblech (5), **dadurch gekennzeichnet, dass** die Fahrzeugstruktur oder das Fahrzeugblech (5) Schlitze (22) aufweist, in welche die hakenartigen Haltemittel (13,15) eingesteckt sind, wobei Bestandteile der hakenartigen Haltemittel in der Montagesolllage Bereiche der Fahrzeugstruktur oder des Fahrzeugblechs (5) untergreifend angeordnet sind, um die Führungsschiene (1) daran zu befestigen.

3. Höhenversteller nach Anspruch 2, **dadurch gekennzeichnet, dass** die Führungsschiene (1) zusätzlich an mindestens einem Längsende mit der Fahrzeugstruktur oder dem Fahrzeugblech (5) lösbar verbunden sind.

4. Höhenversteller nach Anspruch 3, **dadurch gekennzeichnet, dass** die Verbindung durch Verhakung und/oder Verschraubung mittels Befestigungsschraube (19) vorgesehen ist.

5. Höhenversteller nach Anspruch 3 oder 4, **dadurch gekennzeichnet, dass** die Führungsschiene (1) an einem Längsende verkröpft ist und mit dem verkröpften Ende in eine Ausnehmung (4.1, 4.2) der Fahrzeugstruktur oder des Fahrzeugbleches (5) eingesetzt ist, so dass das Ende die Fahrzeugstruktur oder das Fahrzeugblech (5) untergreift.

6. Höhenversteller nach Anspruch 5, **dadurch gekennzeichnet, dass** am verkröpften Ende eine Haltenase (11) angeformt ist, die dem freien Ende des verkröpften Endes entgegengerichtet ist und die in Montagesolllage die Fahrzeugstruktur oder das Fahrzeugblech (5) untergreift.

7. Höhenversteller nach Anspruch 5, **dadurch gekennzeichnet, dass** die Ausnehmung (4,2) und das verkröpfte Ende derart angeordnet und ausgebildet ist, dass das verkröpfte Ende bei um 90 ° um ihre Längsachse verdrehter Führungsschiene (1) in die Ausnehmung (4.2) einsteckbar ist, und das verkröpfte Ende im Übergang zur Führungsschiene (1) eingeschnürt ist, so dass das verkröpfte Ende in Einstecklage um 90 ° in die Montagesolllage samt Führungsschiene (1) verdreht hinter der Fahrzeugstruktur oder dem Fahrzeugblech (5) anzuordnen ist.

8. Höhenversteller nach Anspruch 3 oder 4, **dadurch gekennzeichnet, dass** die Fahrzeugstruktur oder das Fahrzeugblech (5) eine ausgestellte Lasche (21) aufweist, in die ein Ende (20) der Führungsschiene in Montagesolllage eingesteckt ist.

9. Höhenversteller nach einem der Ansprüche 2 bis 7, **dadurch gekennzeichnet, dass** die hakenartigen Haltemittel (13,15) zu der die Befestigungsebene für die Führungsschiene (1) bildenden Fahrzeugstruktur oder zu dem Fahrzeugblech (5) hin vorragend, vorzugsweise rechtwinklig von der Führungsschiene (1) abragend, ausgerichtet sind.

10. Höhenversteller nach Anspruch 9, **dadurch gekennzeichnet, dass** die hakenartigen Haltemittel (13) T-förmig ausgebildet sind und die Schlitze (22) ebenfalls T-förmig ausgeformt sind, wobei deren Längssteg parallel zur in Montagerichtung ausgerichteten Führungsschiene (1) gerichtet sind.

11. Höhenversteller nach Anspruch 9, **dadurch gekennzeichnet, dass** die hakenartigen Haltemittel (15) L-förmig ausgebildet sind, vorzugsweise paarweise an jedem Rastfensterausschnitt, wobei in Montagesolllage die Enden der Haken alle gleichgerichtet sind und parallel zur Schienenlängserstreckung ausgerichtet sind.

12. Höhenversteller nach einem der Ansprüche 2 bis 10, **dadurch gekennzeichnet, dass** unter der Fahrzeugstruktur oder dem Fahrzeugblech (5) ein Verstärkungsteil (17), insbesondere ein Verstärkungsblech angeordnet ist, welches die entsprechenden Schlitze und/oder Ausnehmungen und/oder Lasche wie diese oder dieses aufweist, wobei die hakenartigen Haltemittel (13,15) und/oder die Verkröpfung und/oder das Ende (20) der Führungsschiene (1) das Verstärkungsteil (17) mit untergreift.

## Claims

1. A height adjuster (2) for the deflection fitting of an automobile seatbelt, consisting of a guide rail (1) that can be fastened in the vehicle, and a carriage (23) displaceably held therein along the guide rail, at which carriage the deflection fitting can be fastened and which can be latched in different positions, for which purpose the guide rail (1) comprises latching windows (12) spaced in the longitudinal direction, **characterized in that** the guide rail (1) comprises hook-like retaining units (13, 15), which are formed out of the material cut free from the latching windows (12) and being formed over at least one edge of the latch window cutout at the guide rail (1), and that the hook-like retaining units (13, 15) are configured such that for fastening the guide rail (1) they can be inserted into slots (22) of a vehicle structure or of a vehicle sheet metal (5), such that in the desired assembly position, components of the hook-like retaining units (13, 15) are arranged underneath areas of the vehicle structure or of the vehicle sheet metal (5).

2. The height adjuster according to claim 1, fastened at a vehicle structure or a vehicle sheet metal (5), **characterized in that** the vehicle structure or the vehicle sheet metal (5) comprises slots (22), into which the hook-like retaining units (13, 15) are inserted, components of the hook-like retaining units being arranged, in the desired assembly position, underneath areas of the vehicle structure or of the vehicle sheet metal (5), in order to fasten the guide rail (1) thereat.

3. The height adjuster according to claim 2, **characterized in that** the guide rail (1) is additionally connected in a detachable manner at least at one longitudinal end with the vehicle structure or the vehicle sheet metal (5).

4. The height adjuster according to claim 3, **characterized in that** the connection is provided by hooking and/or screwing by means of a fixing screw (19).

5. The height adjuster according to claim 3 or 4, **characterized in that** the guide rail (1) is cranked at a longitudinal end and is inserted with the cranked end into a recess (4.1, 4.2) of the vehicle structure or of the vehicle sheet metal (5), so that the end is arranged underneath the vehicle structure or the vehicle sheet metal (5).

6. The height adjuster according to claim 5, **characterized in that** a retaining lug (11) is formed at the cranked end, said retaining lug being opposed to the free end of the cranked end and in the desired assembly position being arranged underneath the vehicle structure or the vehicle sheet metal (5).

7. The height adjuster according to claim 5, **characterized in that** the recess (4.2) and the cranked end are arranged and configured such that the cranked end can be inserted, when the guide rail (1) is rotated by 90° about its longitudinal axis, into the recess (4.2), and the cranked end is constricted in the transition to the guide rail (1), so that in the insertion position, the cranked end together with the guide rail (1) is rotated by 90° into the desired assembly position behind the vehicle structure or the vehicle sheet metal (5).

8. The height adjuster according to claim 3 or 4, **characterized in that** the vehicle structure or the vehicle sheet metal (5) comprises a deployed lug (21), into which, in the desired assembly position, an end (20) of the guide rail is inserted.

9. The height adjuster according to one of claims 2 to 7, **characterized in that** the hook-like retaining units (13, 15) protrude toward the vehicle structure forming the fastening plane for the guide rail (1) or toward the vehicle sheet metal (5), preferably projecting at right angles from the guide rail (1).

10. The height adjuster according to claim 9, **characterized in that** the hook-like retaining units (13) are T-shaped and the slots (22) are also T-shaped, the longitudinal web thereof being directed in parallel to the guide rail (1) oriented in the assembly direction.

11. The height adjuster according to claim 9, **characterized in that** the hook-like retaining units (15) are L-shaped, preferably pair-wise at every latch window cutout, in the desired assembly position the ends of the hooks being all aligned and in parallel to the longitudinal extension of the rail.

12. The height adjuster according to one of claims 2 to 10, **characterized in that** a reinforcement part (17), in particular a reinforcement sheet is arranged under the vehicle structure or the vehicle sheet metal (5), said reinforcement part comprising the respective slots and / or recesses and / or lug like the vehicle structure or the vehicle sheet metal, the hook-like retaining units (13, 15) and/or the cranked portion and / or the end (20) of the guide rail (1) also being arranged underneath the reinforcement part (17).

## Revendications

1. Dispositif de réglage en hauteur (2) pour l'ancrage de renvoi d'une ceinture de sécurité d'un véhicule, comprenant un rail de guidage (1), qui peut être fixé dans le véhicule, et un glissoir (23) tenu en déplacement là-dedans le long du rail de guidage, à ce glissoir l'ancrage de renvoi pouvant être fixé et ce glissoir pouvant s'engager dans des positions différentes, pour ce but le rail de guidage (1) comprenant des fenêtres d'encliquetage (12) espacées dans la direction longitudinale, **caractérisé en ce que** le rail de guidage (1) comprend des moyens de retenue (13, 15) en forme de crochets, qui sont formés en le matériau découpé des fenêtres d'encliquetage (12) et formé sur au moins une arête de la découpe de la fenêtre d'encliquetage au rail de guidage (1), et que les moyens de retenue (13, 15) en forme de crochets sont configurés de tel façon, qu'ils puissent insérés, pour la fixation du rail de guidage (1), dans des fentes (22) d'une structure de véhicule ou d'une tôle de véhicule (5), de sorte que des composants des moyens de retenue (13, 15) en forme de crochets saisissent, dans la position de montage nominale, par le dessous de sections de la structure de véhicule ou de la tôle de véhicule (5).

2. Dispositif de réglage en hauteur selon la revendication 1, fixé à une structure de véhicule ou une tôle de véhicule (5), **caractérisé en ce que** la structure de véhicule ou la tôle de véhicule (5) comprend des fentes (22), dans lesquelles les moyens de retenue (13, 15) en forme de crochets sont insérés, des composants des moyens de retenue en forme de crochets saisissant, dans la position de montage nominale, par le dessous de sections de la structure de véhicule ou de la tôle de véhicule (5), afin de fixer le rail de guidage (1) à celles-ci.

3. Dispositif de réglage en hauteur selon la revendication 2, **caractérisé en ce que** le rail de guidage (1) est additionnellement lié de façon détachable à au moins une extrémité longitudinale à la structure de véhicule ou la tôle de véhicule (5).

4. Dispositif de réglage en hauteur selon la revendication 3, **caractérisé en ce que** le liage est prévu par accrochage et/ou vissage au moyen d'une vis de fixation (19).

5. Dispositif de réglage en hauteur selon la revendication 3 ou 4, **caractérisé en ce que** le rail de guidage (1) est coudé à une extrémité longitudinale et est inséré avec l'extrémité coudée dans un évidement (4.1, 4.2) de la structure de véhicule ou de la tôle de véhicule (5), de sorte que l'extrémité saisisse par le dessous de la structure de véhicule ou de la tôle de véhicule (5).

6. Dispositif de réglage en hauteur selon la revendication 5, **caractérisé en ce qu'**un ergot de retenue (11) est formé à l'extrémité coudée, qui est opposé à l'extrémité libre de l'extrémité coudée et qui dans la position de montage nominale saisit par le dessous de la structure de véhicule ou de la tôle de véhicule (5).

7. Dispositif de réglage en hauteur selon la revendication 5, **caractérisé en ce que** l'évidement (4.2) et l'extrémité coudée sont arrangés et configurés de tel façon, que l'extrémité coudée puisse être insérée dans l'évidement (4.2), si le rail de guidage (1) est tourné par 90° autour de son axe longitudinal, et l'extrémité coudée soit resserrée dans la transition menant au rail de guidage (1), de sorte que dans la position d'insertion l'extrémité coudée ensemble avec le rail de guidage (1) soit tournée par 90° dans la position de montage nominale derrière la structure de véhicule ou la tôle de véhicule (5).

8. Dispositif de réglage en hauteur selon la revendication 3 ou 4, **caractérisé en ce que** la structure de véhicule ou la tôle de véhicule (5) comprend une patte (21) en saillie, dans laquelle dans la position de montage nominale une extrémité (20) du rail de guidage est insérée.

9. Dispositif de réglage en hauteur selon une des revendications 2 à 7, **caractérisé en ce que** les moyens de retenue (13, 15) en forme de crochets sont disposés en saillie vers la structure de véhicule formant le plan de fixation pour le rail de guidage (1) ou vers la tôle de véhicule (5), de préférence verticalement en saillie sur le rail de guidage (1).

10. Dispositif de réglage en hauteur selon la revendication 9, **caractérisé en ce que** les moyens de retenue (13) en forme de crochets sont en forme de T et les fentes (22) sont aussi en forme de T, l'entretoise longitudinale de celles-ci étant en parallèle au rail de guidage (1) orienté dans la direction d'installation.

11. Dispositif de réglage en hauteur selon la revendication 9, **caractérisé en ce que** les moyens de retenue (15) en forme de crochets sont en forme de L, de préférence par paires à chaque découpe des fenêtres d'encliquetage, dans la position de montage nominale toutes les extrémités des crochets sont en alignement et orientées en parallèle à l'étendue longitudinale du rail.

12. Dispositif de réglage en hauteur selon une des revendications 2 à 10, **caractérisé en ce qu'**une pièce de renforcement (17), en particulier une bande de renforcement est arrangée au-dessous de la structure de véhicule ou la tôle de véhicule (5), cette pièce de renforcement comprenant les fentes respectives et/ou les évidements respectifs et/ou la patte comme celles-ci, les moyens de retenue (13, 15) en forme de crochets et/ou le coudage et/ou l'extrémité (20) du rail de guidage (1) saisissant aussi par le dessous de la pièce de renforcement (17).
